# EUROPEAN PATENT SPECIFICATION

(11) **EP 4 230 982 B1**
(45) Date of publication and mention of the grant of the patent: **01.04.2026**
(21) Application number: 23156974.0
(22) Date of filing: 16.02.2023
(51) Int. Cl.: G01L 9/00, G01L 19/12, G01L 27/00

(54) **PRESSURE SENSOR**
DRUCKSENSOR
CAPTEUR DE PRESSION

(30) Priority: 16.02.2022 JP 2022022401
(43) Date of publication of application: 23.08.2023
(73) Proprietor: TDK Corporation, Tokyo 103-6128 (JP)
(72) Inventor: KOBAYASHI, Masanori, Tokyo, 103-6128 (JP); UNNO, Ken, Tokyo, 103-6128 (JP); SASAHARA, Tetsuya, Tokyo, 103-6128 (JP); NAWAOKA, Kohei, Tokyo, 103-6128 (JP)
(74) Representative: Epping - Hermann - Fischer

(56) References cited:
- WO-A1-2012/144054
- JP-A- 2020 038 178
- JP-A- 2021 131 346
- JP-A- 2022 014 344

## Description

### Background of the Invention

The present invention relates to a pressure sensor.

As a sensor such as a pressure sensor, proposed is a technique of forming an insulating film covering directly above a film formation surface, a functional film including electrodes and resistances, and a protection film covering upper surfaces of the electrodes and resistances, on the film formation surface of a metal stem (see Patent Document 1 etc.).

Documents JP 2021 131346 A and JP 2022 014344 A disclose pressure sensors including a membrane that deforms according to pressure and laminated electrodes.

Document JP 2020 038178 A describes an exfoliation sensor by means of which exfoliation may be detected.

Document WO 2012/144054 describes a quantity measuring device capable of measuring dynamic quantities acting on a semiconductor substrate to which the measuring device is attached and capable of detecting peeling of itself.

In the metal stem with such films, a peeling due to differences in material, linear expansion coefficient, etc. may occur, for example, between the film formation surface and a film formed thereon or between films to be formed. In the manufacturing stage, it is necessary to confirm that a film formed on the film formation surface of the metal stem is not peeled off and to transfer only the film that is not peeled off to the next step.

Patent Document 1: JP2005249520 (A)

### Brief Summary of the Invention

In a conventional film electrode structure, however, since it is confirmed visually or by image analysis that a film is not peeled off, there is a problem that inspection efficiency and inspection accuracy cannot be improved. In addition, when a film is thin and easily transmits light, the film itself is difficult to be recognized due to light, and such a problem tends to become significant.

The present invention has been achieved under such circumstances. It is an object of the present invention to provide a pressure sensor comprising a film peeling detection device capable of efficiently confirming whether a film to be detected is peeled off.

The pressure sensor according to the present invention comprises:
a detection target film;
a first electrode portion contacted with a lower surface of the detection target film; and
a second electrode portion contacted with an upper surface of the detection target film and at least partly opposing to the first electrode portion with the detection target film interposed therebetween,
wherein the first electrode portion comprises:
a first contact region including a first opposing portion contacted with the detection target film and opposing to the second electrode portion; and
a first exposed region exposed from the detection target film.

The pressure sensor according to the present invention includes the first electrode portion and the second electrode portion opposing to each other with the detection target film interposed therebetween and can thus easily detect whether the detection target film is peeled off by connecting the first electrode portion and the second electrode portion to a peeling detection unit for electrically detecting a peeling of the detection target film between the first electrode portion and the second electrode portion. The first electrode portion located on the lower surface of the detection target film includes the first exposed region exposed from the detection target film, and an electrical connection is thus made to the electrode portion under the detection target film.

The second electrode portion comprises: a second contact region including a second opposing portion contacted with the detection target film and opposing to the first electrode portion; and a second exposed region exposed from the detection target film, the first electrode portion may be electrically connected via the first exposed region to a peeling detection unit for detecting a peeling of the detection target film between first electrode portion and the second electrode portion, and the second electrode portion is electrically connected to the peeling detection unit via the second exposed region.

As with the first electrode portion, the second electrode portion located on the upper surface of the detection target film also includes the second exposed region exposed from the detection target film, and such a film electrode structure makes an electrical connection to both electrode portions on the upper surface and the lower surface of the detection target film.

For example, the first electrode portion may comprise a conductive film, and the first contact region and the first exposed region may be arranged on the same plane.

Even if it is difficult to ensure an electrical conduction from the opposite surface to the surface opposing to the detection target film of the first electrode portion due to other members existing on the opposite surface, such a first electrode portion can make an electrical connection for peeling detection from the opposing side to the detection target film.

For example, the detection target film may comprise an insulating film for insulating the upper surface and the lower surface.

Such a film electrode structure can detect a peeling of the insulating film and thus prevent an unexpected degradation of insulation due to a peeling of the insulating film.

For example, the detection target film may comprise a protection film for covering and protecting a member formed under the lower surface.

Such a film electrode structure can detect a peeling of the protection film and thus prevent an unexpected degradation of durability due to a peeling of the protection film.

For example, an area of at least one of the first electrode portion and the second electrode portion viewed from a perpendicular direction to the detection target film may be 1/50 or less of an area of the detection target film.

When an area of the first electrode portion or the second electrode portion is 1/50 or less of an area of the detection target film, regions for arranging other functional portions avoiding the electrode portions can be easily secured on the lower surface or the upper surface of the detection target film. Moreover, the regions to be checked for confirmation of no peeling are limited, and it is thereby possible to obtain a clearer signal can be obtained at the time of peeling.

For example, the first electrode portion may comprise a first electrode first section and a first electrode second section separated from each other, the second electrode portion may comprise a second electrode first section and a second electrode second section separated from each other, at least a part of the second electrode first section may oppose to the first electrode first section with the detection target film interposed therebetween, and at least a part of the second electrode second section may oppose to the first electrode second section with the detection target film interposed therebetween.

When each of the electrode portions includes a plurality of sections separated from each other, it is possible to more securely detect no peeling of the entire detection target film.

For example, the detection target film may comprise: an insulating film for insulating the upper surface and the lower surface; and a protection film for covering and protecting a member formed under the lower surface, at least a part of the second electrode first section may oppose to the first electrode first section with the insulating film interposed therebetween, and at least a part of the second electrode second section may oppose to the first electrode second section with the protection film interposed therebetween.

In such a film electrode structure, it is possible to detect whether each of the insulating film and the protection film is peeled by the first section and the second section.

For example, the second electrode first section and the first electrode second section may be a common electrode.

When the second electrode first section and the first electrode second section are a common electrode, it is possible to detect whether each of the insulating film and the protection film is peeled with a simple electrode structure.

For example, at least one of the first electrode portion and the second electrode portion may overlap with an outer edge of the detection target film.

Since the outer edge is more likely to peel off than the inner portion, such a film electrode structure can more securely detect no peeling of the entire detection target film.

For example, the lower surface of the detection target film may be contacted with the first electrode portion and a film formation surface made of a material different from that of the first electrode portion and may have an adhesion force to the first electrode portion being smaller than an adhesion force to the film formation surface.

In such a film electrode structure, no peeling between the film formation surface and the detection target film can be ensured by detecting no peeling between the electrode portions and the film formation surface.

For example, the detection target film may comprise an insulating film formed on a film formation surface of a stainless steel stem, and the insulating film may comprise at least one of silicon oxide, silicon nitride, and silicon oxynitride.

In such a film electrode structure, an excellent durability can be achieved even in a high temperature and high pressure environment.

For example, the peeling detection unit may detect a capacitance between the first electrode portion and the second electrode portion.

In such a film electrode structure, when the detection target film is an insulating film, it is possible to particularly favorably detect a peeling. In addition to one that detects a capacitance, however, when the detection target film is conductive or a semiconductor, the peeling detection unit can be one that detects a resistance value between the first electrode portion and the second electrode portion.

A pressure sensor according to the present invention comprises: the film electrode structure according to any of the above; and a deformation detection unit formed under the lower surface or above the upper surface of the detection target film and detecting a deformation of a membrane due to pressure.

Such a pressure sensor can detect no peeling of the detection target film and thus achieve a favorable reliability.

For example, the membrane may be a part of a stainless steel stem, and the first electrode portion may be electrically connected to the peeling detection unit via the stem.

In such a pressure sensor, an electrical connection between the first electrode portion and the peeling detection portion is secured with conductivity of the stem, and the film shape and wiring structure can be simpler.

### Brief Description of the Drawing(s)

FIG. 1 is a schematic cross-sectional view of a pressure sensor according to First Embodiment;
FIG. 2 is a top view of the pressure sensor shown in FIG. 1 viewed from above;
FIG. 3 is a conceptual diagram illustrating a cross section of a film electrode structure of the pressure sensor shown in FIG. 1;
FIG. 4 is a conceptual diagram illustrating a peeling detection by the film electrode structure of the pressure sensor shown in FIG. 1;
FIG. 5 is a conceptual diagram illustrating a film electrode structure of a pressure sensor according to First Modification;
FIG. 6 is a conceptual diagram describing a film electrode structure of a pressure sensor according to Second Embodiment using a top view and a cross-sectional view;
FIG. 7 is a conceptual diagram describing a film electrode structure of a pressure sensor according to Third Embodiment using a top view and a cross-sectional view;
FIG. 8 is a conceptual diagram describing a film electrode structure of a pressure sensor according to Fourth Embodiment using a top view and a cross-sectional view;
FIG. 9 is a conceptual diagram describing a film electrode structure of a pressure sensor according to Fifth Embodiment using a top view and a cross-sectional view;
FIG. 10 is a conceptual diagram describing a film electrode structure of a pressure sensor according to Sixth Embodiment using a top view and a cross-sectional view;
FIG. 11 is a conceptual diagram describing a film electrode structure of a pressure sensor according to Seventh Embodiment using a top view and a cross-sectional view;
FIG. 12 is a conceptual diagram describing a film electrode structure of a pressure sensor according to Eighth Embodiment using a top view;
FIG. 13 is a conceptual diagram describing a film electrode structure of a pressure sensor according to Ninth Embodiment using a top view;
FIG. 14 is a conceptual diagram describing a film electrode structure of a pressure sensor according to Tenth Embodiment using a top view;
FIG. 15 is a schematic cross-sectional view of a pressure sensor according to Eleventh Embodiment;
FIG. 16 is a schematic cross-sectional view of a pressure sensor according to Second Modification;
FIG. 17 is a schematic cross-sectional view of a pressure sensor according to Third Modification; and
FIG. 18 is a graph showing an example of a change in capacitance between electrodes by a peeling detection unit.

### Detailed Description of the Invention

Hereinafter, the present invention is described based on embodiments shown in the figures.

### First Embodiment

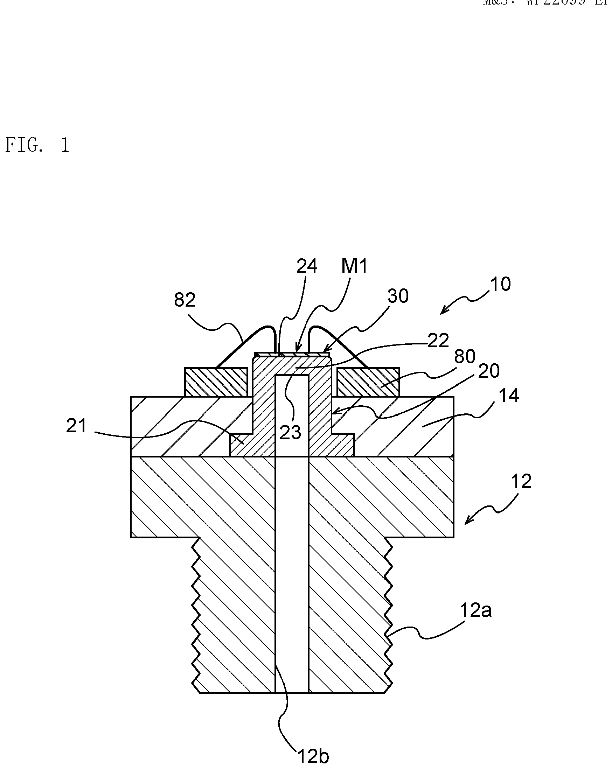

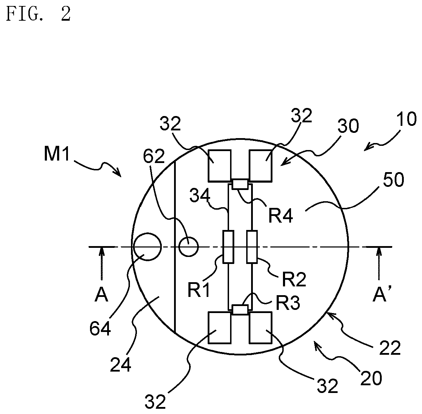

FIG. 1 is a schematic cross-sectional view of a pressure sensor 10 using a film electrode structure M1 according to First Embodiment of the present invention. As shown in FIG. 1, the pressure sensor 10 includes a deformation detection unit 30 for detecting a deformation of a membrane 22 due to pressure, the film electrode structure M1 capable of detecting a peeling of a film to be detected including an insulating film 50 (see FIG. 2), and the like. The pressure sensor 10 shown in FIG. 1 includes a metal stem 20, and the membrane 22 of the metal stem 20 deforms in response to a pressure received from an inner surface 23 of the membrane 22.

In the present embodiment, the membrane 22 is made of an end wall formed at one end of the hollow cylindrical metal stem 20. The other end of the metal stem 20 is an open end of a hollow portion, and the hollow portion of the metal stem 20 communicates with a flow path 12 b of a connection member 12.

In the embodiment, one used as a part of the pressure sensor 10 by being combined with the deformation detection unit 30 (see FIG. 2) on the membrane 22 is described as an example of the film electrode structure M1, but the film electrode structure M1 is not limited to one used in the pressure sensor 10. For example, the film electrode structure M1 also includes ones used for applications other than the pressure sensor 10, such as a strain gauge and other sensors, as a complex structure of a film and an electrode capable of electrically detecting a peeling of a film to be detected.

In the pressure sensor 10, as shown in FIG. 1, a fluid introduced into the flow path 12b is guided from the hollow portion of the metal stem 20 to the inner surface 23 of the membrane 22, and a fluid pressure acts on the membrane 22. The metal stem 20 is made of metal, such as stainless steel. Examples of stainless steel constituting the metal stem 20 include austenitic SUS304 and SUS316 and precipitation hardening SUS630 and SUS631, but stainless steel constituting the metal stem 20 is not limited to them.

A flange portion 21 is formed around the open end of the metal stem 20. The flange portion 21 is formed so as to protrude radially outward from the peripheral wall of the metal stem 20. The flange portion 21 is sandwiched and fixed between the connection member 12 and a holding member 14, and the flow path 12b leading to the inner surface 23 of the membrane 22 is thereby sealed.

The connection member 12 includes a screw groove 12a for connecting the pressure sensor 10 to a pipe, an external flow path, or the like. The pressure sensor 10 is fixed via the screw groove 12a to a pressure chamber or the like enclosing a fluid to be measured. As a result, the flow path 12b formed inside the connection member 12 and the inner surface 23 of the membrane 22 of the metal stem 20 airtightly communicate with the pressure chamber in which a fluid to be measured exists.

A circuit board 80 is attached to the upper surface of the holding member 14. The circuit board 80 has a ring shape surrounding the metal stem 20, but the shape of the circuit board 80 is not limited to this. Detection signals are transmitted to the circuit board 80 from the deformation detection unit 30 (see FIG. 2) disposed on the side of a film formation surface 24 of the metal stem 20 and from the electrode unit of the film electrode structure M1.

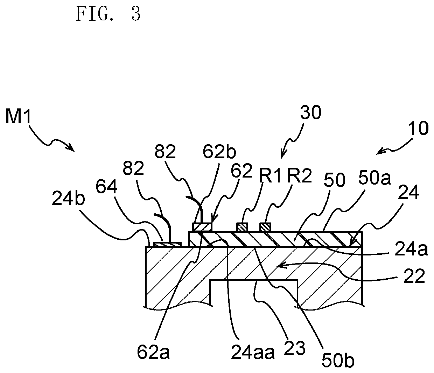

The membrane 22 of the metal stem 20 includes a film formation surface 24. As shown in FIG. 1, the film formation surface 24 of the metal stem 20 is the surface (outer surface) opposite to the inner surface 23 of the membrane 22. Most of the film formation surface 24 is covered with the insulating film 50. In the present embodiment, however, as shown in FIG. 3, the film formation surface 24 is partly exposed from the insulating film 50. Note that, the insulating film 50 is a film to be detected, which is a target of peeling detection by the film electrode structure M1. The deformation detection unit 30 for detecting a deformation of the membrane 22 due to pressure (see FIG. 2) is formed on the insulating film 50.

An intermediate wiring 82 shown in FIG. 1 connects the deformation detection unit 30 provided on the film formation surface 24 side of the membrane 22 and the circuit board 80. Moreover, the intermediate wiring 82 connects a first electrode portion (the film formation surface 24 of the metal stem 20) and a second electrode portion 62 of the film electrode structure M1 and the circuit board 80 (see FIG. 3). The intermediate wiring 82 shown in FIG. 1 consists of a plurality of bonding wires or the like, but the intermediate wiring 82 may have a wiring structure other than wire bonding. In the description of the pressure sensor 10, the downward direction is a direction perpendicular to the film formation surface 24 and directed to the inner surface 23 (inside the metal stem 20), and the upward direction is a direction perpendicular to the film formation surface 24 and directed to the opposite side of the inner surface 23 (a direction away from the metal stem 20).

FIG. 2 is a top view of the pressure sensor 10 shown in FIG. 1 viewed from above the film formation surface 24 of the membrane 22. FIG. 3 is a cross-sectional view along the cross-sectional line A-A' of the pressure sensor 10 shown in FIG. 2. In FIG. 2 and FIG. 3, however, the circuit board 80, the intermediate wiring 82, and the like are not illustrated except for some. As shown in FIG. 2 and FIG. 3, the insulating film 50 is formed on the film formation surface 24 (the upper surface of the membrane 22), and the deformation detection unit 30 and the second electrode portion 62 are formed on an upper surface 50a of the insulating film 50.

As shown in FIG. 2, the insulating film 50 is formed over a wide range (70% or more, preferably 80% or more) of the film formation surface 24 of the metal stem 20 shown in FIG. 1, and most of the film formation surface 24 are hidden under the insulating film 50. The deformation detection unit 30 includes resistors R1, R2, R3, and R4 connected by an electric wiring 34, and detection electrode portions 32 electrically connected to the resistors R1 to R4 and connected with the intermediate wiring 82 shown in FIG. 1, and the like.

The resistors R1 to R4 of the deformation detection unit 30 are formed at predetermined positions of the membrane 22 and generate a strain according to the deformation of the membrane 22 to change the resistance values. The resistors R1 to R4 are connected by the electrical wiring 34 so as to form a Wheatstone bridge circuit. The resistors R1 to R4 of the deformation detection unit 30 are insulated from the film formation surface 24 of the metal stem 20 by the insulating film 50.

The pressure sensor 10 shown in FIG. 1 can detect a fluid pressure acting on the membrane 22 from the output of the deformation detection unit 30 shown in FIG. 2. That is, the output of the Wheatstone bridge formed by the resistors R1 to R4 is configured to change according to the strain amount of the membrane 22 associated with the fluid pressure. The circuit board 80 shown in FIG. 1 can obtain a detection signal of the deformation detection unit 30 via the detection electrode portion 32 and the intermediate wiring 82.

The pressure sensor 10 shown in FIG. 2 and FIG. 3 incorporates the film electrode structure M1 capable of detecting a peeling occurring in the insulating film 50 as a film to be detected. The film electrode structure M1 includes the insulating film 50 as a film to be detected, the metal stem 20 as the first electrode portion (particularly, the film formation surface 24 of the membrane 22), and the second electrode portion 62.

As shown in FIG. 3, the film formation surface 24 (the first electrode portion of the film electrode structure M1) is contacted with a lower surface 50b of the insulating film 50 as a film to be detected. As shown in FIG. 2, the film formation surface 24 has a substantially circular shape when viewed from above and has an area larger than that of the insulating film 50.

As shown in FIG. 3, the second electrode portion 62 of the film electrode structure M1 is disposed at a position not overlapping with the deformation detection unit 30 on the upper surface 50a of the insulating film 50 as a film to be detected. The lower surface of the second electrode portion 62 is contacted with the upper surface 50a of the insulating film 50 and at least partly opposes to the film formation surface 24 (first electrode portion) with the insulating film 50 interposed therebetween. The second electrode portion 62 is made of a conductive film or the like (a metal thin film). For example, the material of the second electrode portion 62 can be similar to that of the detection electrode portion 32 of the deformation detection unit 30 shown in FIG. 2, but may be different from that of the detection electrode portion 32.

As shown in FIG. 2 and FIG. 3, the film formation surface 24 of the metal stem 20 functioning as the first electrode portion includes a first contact region 24a contacted with the insulating film 50 as a film to be detected and a first exposed region 24b exposed from the insulating film 50. The first contact region 24a includes a first opposing portion 24aa opposing to the second electrode portion 62.

A connection portion 64 connected with the intermediate wiring 82 is formed in the first exposed region 24b. The metal stem 20 including the film formation surface 24 of the membrane 22 is made of a conductive material, and the first opposing portion 24aa of the film formation surface 24 as the first electrode portion is electrically connected to the circuit board 80 (see FIG. 1) via other portions of the first contact region 24a, the first exposed region 24b, the intermediate wiring 82, and the like. As shown in FIG. 3, both of the first contact region 24a and the first exposed region 24b are part of the film formation surface 24 and are arranged on the same plane.

As shown in FIG. 2 and FIG. 3, the second electrode portion 62 of the film electrode structure M1 includes a second contact region 62a contacted with the insulating film 50 and a second exposed region 62b exposed from the insulating film 50. The second contact region 62a is the entire lower surface of the second electrode portion 62, and the second exposed region 62b is the entire upper surface of the second electrode portion 62. The second contact region 62a includes a second opposing portion opposing to the film formation surface 24. Since the whole of the second contact region 62a opposes to the film formation surface 24 of the membrane 22 (first electrode portion), however, the whole of the second contact region 62a constitutes the second opposing region.

As shown in FIG. 3, similarly to the first exposed region 24b, the intermediate wiring 82 is connected to the second exposed region 62b. Since the second electrode portion 62 is a conductive film, the second opposing portion (the whole of the second contact region 62a) of the second electrode portion 62 is electrically connected to the circuit board 80 (see FIG. 1) via the second exposed region 62b, the intermediate wiring 82, and the like.

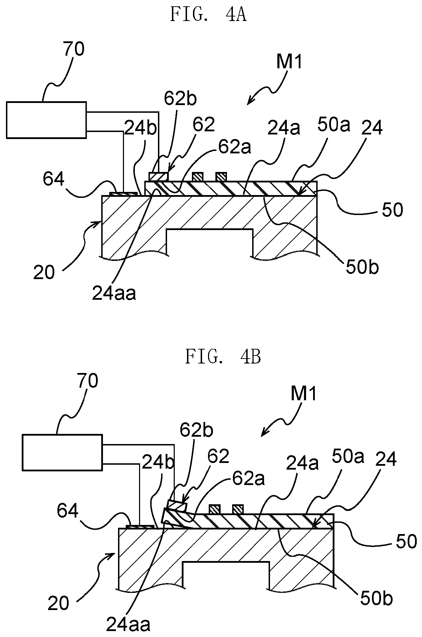

FIG. 4A and FIG. 4B are schematic views illustrating a mechanism of peeling detection by the film electrode structure M1 of the pressure sensor 10. FIG. 4A illustrates a state in which the insulating film 50 (a film to be detected) is not peeled, and FIG. 4B illustrates a state in which the insulating film 50 (a film to be detected) is partly peeled.

The insulating film 50 shown in FIG. 4A is an insulating film insulating between the upper surface 50a side and the lower surface 50b side of the insulating film 50. The material of the insulating film 50 is not limited and can be, for example, a silicon-based film, but is preferably a film containing at least one of silicon oxide, silicon nitride, and silicon oxynitride from the viewpoint of durability under high temperature and high pressure.

As shown in FIG. 4A, the film formation surface 24 as the first electrode portion and the second electrode portion 62 opposing to each other with the insulating film 50 interposed therebetween are electrically connected to a peeling detection unit 70. Examples of the peeling detection unit 70 include one that detects the capacitance between the film formation surface 24 and the second electrode portion 62. The peeling detection unit 70 is provided on the circuit board 80 shown in FIG. 1, a control unit of the pressure sensor 10 connected via the circuit board 80, an inspection unit of the metal stem 20 being manufactured, or the like, and the installation location of the peeling detection unit 70 is not limited.

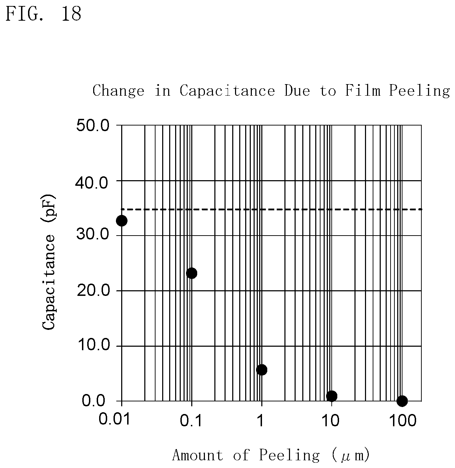

As shown in FIG. 4B, when a peeling occurs between the film formation surface 24 and the insulating film 50 (particularly, between the first opposing portion 24aa of the first contact region 24a and the insulating film 50), the capacitance detected by the peeling detection unit 70 changes. FIG. 18 is a graph showing a relation between a peeling amount between the first opposing portion 24aa and the insulating film 50

(horizontal axis) and a capacitance detected by the peeling detection unit 70 (vertical axis).

As shown in FIG. 18, when the peeling amount between the insulating film 50 and the first opposing portion 24aa increases, the capacitance detected by the peeling detection unit 70 decreases. Thus, the peeling detection unit 70 can detect a peeling between the insulating film 50 and the film formation surface 24 as shown in FIG. 4B by detecting a change in capacitance. As an example of the film electrode structure M1 shown in FIG. 4, FIG. 18 shows a change in capacitance detected using an Example in which: the insulating film 50 containing an oxide of silicon and having a thickness of 1 ₁₁m is formed on the film formation surface 24 of the stainless steel metal stem 20; and a conductive film containing Au is formed on the upper surface 50a of the insulating film 50 to form the second electrode portion 62.

As shown in FIG. 4A and FIG. 4B, the film electrode structure M1 can detect a peeling of the insulating film 50 between the film formation surface 24 as the first electrode portion and the second electrode portion 62. The peeling detection unit 70 of the film electrode structure M1 detects not only a peeling occurring between the first contact region 24a of the film formation surface 24 and the insulating film 50, but also detects a peeling occurring the second contact region 62a of the second electrode portion 62 and the insulating film 50. When the peeling detection unit 70 detects the capacitance, detected is a peeling of the insulating film 50 at portions (the first opposing portion 24aa and the second opposing portion) where the film formation surface 24 and the second electrode portion 62 oppose to each other. Thus, the second electrode portion 62 is preferably formed at a position where the insulating film 50 is likely to peel off from the film formation surface 24 (e.g., near the outer edge of the insulating film 50) so as to oppose to the film formation surface 24 at that position.

The insulating film 50 shown in FIG. 1 to FIG. 4 can be formed on the film formation surface 24 (the outer surface of the membrane 22) by a vapor deposition, such as CVD. The thickness of the insulating film 50 is preferably 10 µm or less and is more preferably 1 to 5 µm.

The material of the second electrode portion 62 is not limited and is, for example, a conductive thin film containing Au, Al, Ni, platinum group elements, or the like. The second electrode portion 62 can be formed by a thin film method, such as sputtering and vapor deposition, but the method of forming the second electrode portion 62 is not limited. The thickness of the second electrode portion 62 is preferably 1 µm or less and is more preferably 0.1 to 0.5 µm.

The deformation detection unit 30 shown in FIG. 2 can be manufactured by forming a strain resistance film or an electrode film with a predetermined shape on the upper surface 50a of the insulating film 50. The strain resistance film to be part of the resistors R1 to R4 and the electric wiring 34 is not limited and is, for example, a conductive thin film containing Cr and Ar. The resistors R1 to R4 of the deformation detection unit 30 are manufactured by, for example, patterning a strain resistance film formed by a thin film method into a predetermined shape. As with the strain resistance film, the detection electrode portion 32 is also formed of a thin film. The material of the detection electrode portion 32 includes metals such as Au, Al, and Ni.

As described above, the pressure sensor 10 according to First Embodiment described with reference to FIG. 1 to FIG. 4 is formed on the upper surface 50a side of the insulating film 50 and includes the deformation detection unit 30 for detecting a deformation of the membrane 22 due to pressure. Moreover, the pressure sensor 10 includes the film electrode structure M1 capable of detecting a peeling of the insulating film 50. Thus, after the film electrode structure M1 detects that a peeling is not generated between the insulating film 50 and the film formation surface 24, the pressure sensor 10 can improve the accuracy of detection values and prevent a detection of erroneous values due to the generation of peeling

Since the film electrode structure M1 detects a peeling of a film to be detected from a change in electrical detection value, such as change in capacitance, it is possible to efficiently confirm that no peeling is generated in a film to be detected. In addition, the film electrode structure M1 can improve inspection efficiency and inspection accuracy compared to conventional methods, such as visual inspection and image analysis. Moreover, due to electrical detection, it is relatively easy to incorporate the film electrode structure M1 into the pressure sensor 10 as a product.

As shown in FIG. 3, since the film formation surface 24 of the membrane 22 as the first electrode portion located on the lower surface 50b of the insulating film 50 includes the first exposed region 24b exposed from the insulating film 50, an electrical connection can also be made to the electrode portion under the insulating film 50.

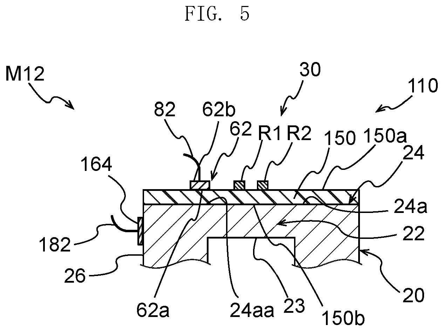

When the material of the stem 20 is a stainless steel having a good conductivity, not only the film formation surface 24 of the membrane 22, but also the entire metal stem 20 can be considered as the first electrode portion. In this case, the wiring structure for connecting the peeling detection unit 70 shown in FIG. 4 and the first electrode portion is not limited to only the structure for forming the first exposed region 24b on the film formation surface 24 of the membrane 22. FIG. 5 is a cross-sectional view of a pressure sensor 110 including a film electrode structure M12 according to First Modification.

In the film electrode structure M12 of the pressure sensor 110 shown in FIG. 5, the whole of the metal stem 20 constitutes a first electrode portion. The pressure sensor 110 and the film electrode structure M12 are different from the pressure sensor 10 and the film electrode structure M1 according to First Embodiment in that: an insulating film 150 covers the whole of the film formation surface 24 of the membrane 22; and a first exposed region of the first electrode portion is a stem outer surface 26, but the pressure sensor 110 and the film electrode structure M12 are similar to the pressure sensor 10 and the film electrode structure M1 in other respects. In the description of the pressure sensor 110 and the film electrode structure M12 shown in FIG. 5, the differences from the pressure sensor 10 shown in FIG. 3 etc. are mainly described, and the common respects with the pressure sensor 10 are provided with the same reference numerals and are not described.

In the film electrode structure M12, as shown in FIG. 5, a lower surface 150b of the insulating film 150 is contacted with the whole of the film formation surface 24, and the whole of the film formation surface 24 corresponds with a first contact region of the first electrode portion. The insulating film 150 is easy to manufacture. This is because: an area of an upper surface 150a for disposing the deformation detection unit 30 can be wider than that of the insulating film 50 shown in FIG. 2 and FIG. 3; and the insulating film 150 is formed on the whole of the film formation surface 24.

As with the film electrode structure M1 shown in FIG. 3, the film electrode structure M12 includes the second electrode portion 62 formed on the upper surface 150a of the insulating film 150. The first opposing portion 24aa is formed in a portion of the film formation surface 24 (corresponding to the first contact region) opposing to the second contact region 62a of the second electrode portion 62. The second electrode portion 62 shown in FIG. 5 is similar to the second electrode portion 62 shown in FIG. 3. The whole of the second contact region 62a is a second opposing portion. The upper surface of the second electrode portion 62 is the second exposed region 62b.

In the film electrode structure M12, as shown in FIG. 5, the whole of the metal stem 20 is a first electrode portion, and the stem outer surface 26 of the metal stem 20 exposed from the insulating film 150 constitutes a first exposed region of the first electrode portion. A connection portion 164 connected with an intermediate wiring 182 is provided on the outer surface 26, and the intermediate wiring 182 electrically connecting the peeling detection unit 70 (see FIG. 4) and the first electrode portion is connected to the connection portion 164. As a result, similarly to the membrane electrode structure M1 shown in FIG 4, the film electrode structure M12 can detect a peeling occurring between the insulating film 150 and the film formation surface 24 from change in capacitance.

As for common respects with the pressure sensor 10 and the film electrode structure M1, the pressure sensor 110 and the film electrode structure M12 according to First Modification exhibit effects similar to those of the pressure sensor 10 and the film electrode structure M1.

### Second Embodiment

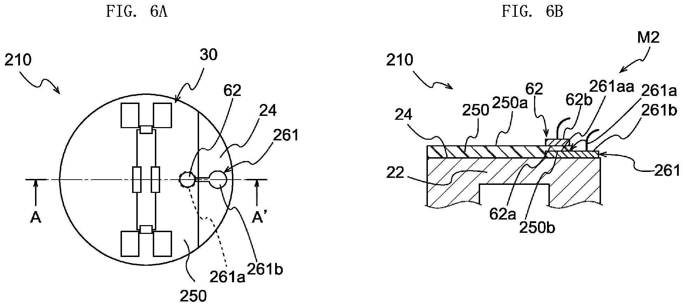

FIG. 6 is a conceptual diagram describing a film electrode structure M2 of a pressure sensor 210 according to Second Embodiment using a top view (FIG. 6A) and a cross-sectional view (FIG. 6B). The film electrode structure M2 is different from the film electrode structure M1 of the pressure sensor 10 shown in FIG. 3 in that the film electrode structure M2 includes a first electrode portion 261 provided on the film formation surface 24 separately from the metal stem 20. Except for the shapes of the first electrode portion 261 and an insulating film 250, however, the pressure sensor 210 and the film electrode structure M2 are similar to the pressure sensor 10 and the film electrode structure M1 according to First Embodiment shown in FIG. 3 etc. In the description of the film electrode structure M2 of the pressure sensor 210 according to Second Embodiment, the differences from the pressure sensor 10 and the film electrode structure M1 according to First Embodiment are mainly described, and the common respects with the pressure sensor 10 and the film electrode structure M1 are not described.

As shown in FIG. 6, an insulating film 250 and a first electrode portion 261 are formed on the film formation surface 24 of the metal stem 20 of the pressure sensor 210. Also, the insulating film 250 is formed on the first electrode portion 261 so as to partly overlap therewith. Thus, a lower surface 250b of the insulating film 250 includes a portion contacted with the metal stem 20 and the film formation surface 24 of the membrane 22 and a portion contacted with the upper surface (particularly, a first contact region 261a of the first electrode portion 261) of the first electrode portion 261.

As with the second electrode portion 62, the first electrode portion 261 is made of a conductive film. The first electrode portion 261 can be formed in a predetermined region of the film formation surface 24 by a thin film method, such as sputtering and vapor deposition. The material of the first electrode portion 261 is not limited as long as it is a conductive material. As described below, however, the material of the first electrode portion 261 is preferably a material different from that of the film formation surface 24.

That is, when the material of the first electrode portion 261 is different from that of the film formation surface 24, the adhesive force between the lower surface 250b of the insulating film 250 and the first electrode portion 261 can be smaller than that between the lower surface 250b of the insulating film 250 and the film formation surface 24. For example, when the material of the metal stem 20 including the membrane 22 is a stainless steel, the adhesive force between the lower surface 250b and the first electrode portion 261 can be adjusted to a desired level with the first electrode portion 261 made of a thin film including transition elements belonging to the 5th and 6th periods (specifically, Y, Zr, Nb, Mo, Tc, Ru, Rh Pd, Ag, La, Ce, Pr, Nd, PM, SM, Eu, Gd, Tb, Dy, Ho, Er, TM, Yb, Lu, Hf, Ta, W, Re, Os, Ir, and Pt), platinum group elements (specifically, Ru, Rh Pd, Os, Ir, and Pt), and the like.

When the adhesive force between the lower surface 250b of the insulating film 250 and the first electrode portion 261 is smaller than that between the lower surface 250b of the insulating film 250 and the film formation surface 24, the detection of no peeling with the film electrode structure M2 can favorably ensure that there is no peeling between the insulating film 250 and the film formation surface 24, where the adhesive force is larger.

As shown in FIG. 6A and FIG. 6B, the upper surface of the first electrode portion 261 includes a first contact region 261a contacted with the lower surface 250b of the insulating film 250 and a first exposed region 261b exposed from the insulating film 250. The first contact region 261a and the first exposed region 261b are arranged on the same plane and connected under the outer edge of the insulating film 250.

Moreover, the first contact region 261a includes a first opposing portion 261aa opposing to the lower surface of the second electrode portion 62 with the insulating film 250 interposed therebetween. The second electrode portion 62 is provided on an upper surface 250a of the insulating film 250. The second contact region 62a (the lower surface of the second electrode portion 62) is contacted with the upper surface 250a of the insulating film 250, and the second contact region 62a at least partly opposes to the first electrode portion 261 with the insulating film 250 interposed therebetween. That is, the first opposing portion 261aa formed on the upper surface of the first electrode portion 261 and a second opposing portion (the whole of the second contact region 62a) formed on the lower surface of the second electrode portion 62 oppose to each other.

In the film electrode structure M2 shown in FIG. 6, the area of the second contact region 62a of the second electrode portion 62 and the area of the first contact region 261a of the first electrode portion 261 are substantially the same. However, the shape and size of the second contact region 62a and the first contact region 261a are not limited to the example shown in FIG. 6, and one of the second contact region 62a and the first contact region 261a may have a larger area than the other.

The intermediate wiring 82 is connected to the first exposed region 261b of the first electrode portion 261 and the second exposed region 62b (the upper surface of the second electrode portion 62). As a result, similarly to the film electrode structure M1 shown in FIG. 4, the first electrode portion 261 and the second electrode portion 62 of the film electrode structure M2 are electrically connected to the peeling detection unit 70 (see FIG. 4).

As with the film electrode structure M1 described with reference to FIG 4 and FIG. 18, the film electrode structure M2 shown in FIG. 6 can detect a peeling occurring in the insulating film 250 between the first electrode portion 261 and the second electrode portion 62 by detecting a change in capacitance between the first electrode portion 261 and the second electrode portion 62. Moreover, the film electrode structure M2 can favorably ensure that there is no peeling between the insulating film 250 and the film formation surface 24 by using the first electrode portion 261 whose adhesive force to the insulating film 250 is smaller than that of the film formation surface 24 of the metal stem 20.

In the common respects with the pressure sensor 10 and the film electrode structure M1, the pressure sensor 210 and the film electrode structure M2 according to Second Embodiment exhibit effects similar to those of the pressure sensor 10 and the film electrode structure M1.

### Third Embodiment

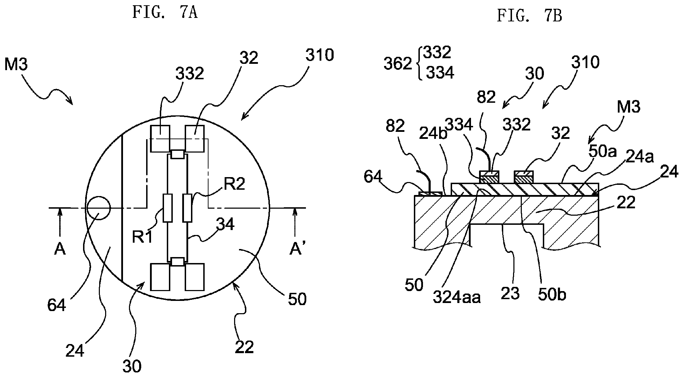

FIG. 7 is a conceptual diagram describing a film electrode structure M3 of a pressure sensor 310 according to Third Embodiment using a top view (FIG. 7A) and a cross-sectional view (FIG. 7B). The film electrode structure M3 is different from the film electrode structure M1 of the pressure sensor 10 shown in FIG. 2 and FIG. 3 in that a detection electrode portion 332, which is one of the detection electrode portions 32 and 332 of the deformation detection unit 30, and a strain resistance film 334 (underlayer thereof) also serve as a second electrode portion 362 of the film electrode section structure M3. Except that the detection electrode portion 332 and the strain resistance film 334 also serve as the second electrode portion 362, however, the pressure sensor 310 and the film electrode structure M3 are similar to the pressure sensor 10 and the film electrode structure M1 according to First Embodiment shown in FIG. 2, FIG. 3 and the like. In the description of the pressure sensor 310 and the film electrode structure M3 according to Third Embodiment, the differences from the pressure sensor 10 and the film electrode structure M1 according to First Embodiment are mainly described, and the common respects with the pressure sensor 10 and the film electrode structure M1 are not described.

As with the film electrode structure M1 shown in FIG. 2 and FIG. 3, the film electrode structure M3 shown in FIG. 7 can detect a peeling between the insulating film 50 formed on the film formation surface 24 of the membrane 22 and the film formation surface 24 also serving as a first electrode portion. The film formation surface 24 also functioning as the first electrode portion of the film electrode structure M1 includes the first contact region 24a contacted with the lower surface 50b of the insulating film 50 and the first exposed region 24b exposed from the insulating film 50. The first contact region 24a includes a first opposing portion 324aa opposing to the strain resistance film 334 functioning as a second electrode portion with the insulating film 40 interposed therebetween.

As shown in FIG. 7A and FIG. 7B, the second electrode portion 362 of the film electrode structure M3 consists of the detection electrode portion 332 and the strain resistance film 334, which are part of the deformation detection unit 30, and has a two-layer structure. The strain resistance film 334 constitutes a lower layer part of the second electrode portion 362 and is contacted with the upper surface 50a of the insulating film 50. The strain resistance film 334 is made of the same material as the resistors R1 to R4 and the electrical wiring 34 of the deformation detection unit 30 and is formed on the upper surface 50a of the insulating film 50 in the same thin film formation process as the resistors R1 to R4 and the electrical wiring 34.

The detection electrode portion 332 constitutes an upper layer part of the second electrode portion 362 of the film electrode structure M3 and is formed on the upper surface of the strain resistance film 334. A film similar to the strain resistance film 334 is also formed on the lower surface of the detection electrode portion 32 excluding the detection electrode portion 332 of the deformation detection unit 30.

In the second electrode portion 362 having a two-layer structure of the detection electrode portion 332 and the strain resistance film 334, as shown in FIG. 7B, the lower surface of the strain resistance film 334 constitutes a second contact region contacted with the insulating film 50. In addition, the whole of the lower surface of the strain resistance film 334 opposes to the film formation surface 24 as the first electrode portion and constitutes a second opposing portion.

In the second electrode portion 362, the upper surface of the detection electrode portion 332 (upper layer) constitutes a second exposed region exposed from the insulating film 50 as a film to be detected. The intermediate wiring 82 is connected to the connection portion 64 provided in the first exposed region 24b and to the detection electrode portion 332 constituting the second exposed region. As a result, similarly to the film electrode structure M1 shown in FIG. 4, the film formation surface 24 as the first electrode portion and the second electrode portion 362 are electrically connected to the peeling detection unit 70 (see FIG. 4) via the intermediate wiring 82 and the like.

In this way, the film electrode structure M3 can detect a peeling occurring between the film formation surface 24 (particularly, the first opposing portion 324aa) and the insulating film 50 by detecting a change in capacitance between the film formation surface 24 as the first electrode portion and the second electrode portion 362. The film electrode structure M3 can also detect a peeling occurring between the insulating film 50 and the strain resistance film 334 by detecting a change in capacitance with the peeling detection unit 70.

In the film electrode structure M3, the film formation surface 24 also serves as the first electrode portion, and the detection electrode portion 332 and the strain resistance film 334, which are part of the deformation detection unit 30, also serve as the second electrode section. Thus, the pressure sensor 310 can easily be manufactured by only adding a few processes to a conventional pressure sensor without the film electrode structure M3. Moreover, since the film electrode structure M3 requires less structure to be added to a conventional pressure sensor without the film electrode structure M3, the film electrode structure M3 can be incorporated into a small space of the pressure sensor 310, which is advantageous for miniaturization.

In the common respects with the pressure sensor 10 and the film electrode structure M1, the pressure sensor 310 and the film electrode structure M3 according to Third Embodiment exhibit effects similar to those of the pressure sensor 10 and the film electrode structure M1.

### Fourth Embodiment

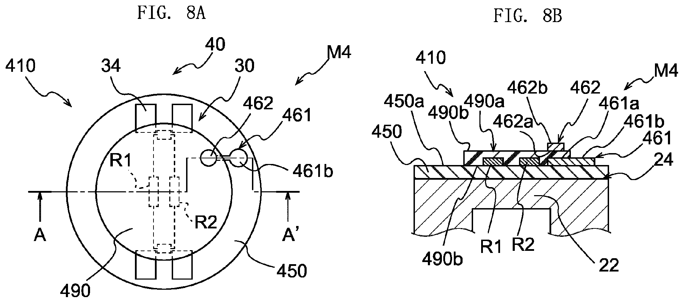

FIG. 8 is a conceptual diagram describing a film electrode structure M4 of a pressure sensor 410 according to Fourth Embodiment using a top view (FIG. 8A) and a cross-sectional view (FIG. 8B). The film electrode structure M4 is different from the film electrode structure M1 of the pressure sensor 10 shown in FIG. 2 and FIG. 3 in terms of a protection film 490 (not the insulating film 450) as a film to be detected and the arrangement and shapes of a first electrode portion 461 and a second electrode portion 462. As for the metal stem 20 and the deformation detection unit 30, however, the pressure sensor 410 and the film electrode structure M4 are similar to the pressure sensor 10 and the film electrode structure M1 according to First Embodiment shown in FIG. 2, FIG. 3 and the like. In the description of the pressure sensor 410 and the film electrode structure M4 according to Fourth Embodiment, the differences from the pressure sensor 10 and the film electrode structure M1 according to First Embodiment are mainly described, and the common respects with the pressure sensor 10 and the film electrode structure M1 are provided with the same reference numerals and are not described.

As shown in FIG. 8A and FIG. 8B, similarly to the pressure sensor 10 shown in FIG. 2 and FIG. 3, the pressure sensor 410 includes the metal stem 20 including the membrane 22 and the deformation detection unit 30 for detecting a deformation of the membrane 22. An insulating film 450 for insulating the film formation surface 24 and the deformation detection unit 30 is formed on the film formation surface 24 of the membrane 22. The insulating film 450 is different from the insulating film 50 shown in FIG. 2 and FIG. 3 in that the insulating film 450 covers the whole of the film formation surface 24, but the insulating film 450 is similar to the insulating film 50 in terms of respects other than shape, such as material and formation method.

The pressure sensor 410 includes a protection film 490. The protection film 490 covers and protects members formed on a lower surface 490b side of the protection film 490, such as the resistors R1 to R4 of the deformation detection unit 30. The material of the protection film 490 is, for example, an insulating thin film containing silicon oxide or the like, but is not limited as long as it protects the resistors R1 to R4 made of strain resistance films or the like.

The film electrode structure M4 detects a peeling of the protection film 490. The film electrode structure M4 includes a first electrode portion 461 contacted with the lower surface 490b of the protection film 490 and a second electrode portion 462 contacted with an upper surface 490a of the protection film 490 and opposing to the first electrode portion 461 with the protection film 490 interposed therebetween. The first electrode portion 461 and the second electrode portion 462 are made of a conductive film similar to that of the detection electrode portion 32 and the second electrode portion 62 shown in FIG. 3. The first electrode portion 461 and the second electrode portion 462 are formed on the upper surfaces of the insulating film 450 and the protection film 490 by a thin film formation process, such as sputtering and CVD.

As shown in FIG. 8B, the first electrode portion 461 is formed on the upper surface 450a of the insulating film 450, and the lower surface of the first electrode portion 461 is contacted with the upper surface 450a of the insulating film 450. The upper surface of the first electrode portion 461 includes a first contact region 461a contacted with the protection film 490 and a first exposed region 461b exposed from the protection film 490. The first contact region 461a and the first exposed region 461b are arranged on the same plane and connected under the outer edge of the protection film 490.

The first contact region 461a includes a first opposing portion opposing to the second electrode portion 462 with the protection film 490 interposed therebetween. Although not shown in FIG. 8B, the first exposed region 461b is connected to the intermediate wiring 82 for electrically connecting the peeling detection unit 70 and the first electrode portion 461 (see FIG. 4).

The second electrode portion 462 is formed on the upper surface 490a of the protection film 490. The entire lower surface of the second electrode portion 462 is a second contact region 462a contacted with the protection film 490, and the upper surface of the second electrode portion 462 is a second exposed region 462b exposed from the protection film 490. The second contact region 462a (the lower surface of the second electrode portion 462) opposes to the upper surface of the first electrode portion 461 with the protection film 490 interposed therebetween, and the whole of the second contact region 462a is also a second opposing portion.

Although not shown in FIG. 8B, the second exposed region 462b is connected with the intermediate wiring 82 for electrically connecting the peeling detection unit 70 and the second electrode portion 462 (see FIG. 4). As with the film electrode structure M1 shown in FIG. 4, the film electrode structure M4 detects a peeling of the protection film 490 between the first electrode portion 461 and the second electrode portion 462 by detecting a change in capacitance between the first electrode portion 461 and the second electrode portion 462.

For example, the film electrode structure M4 can detect a peeling occurring in the lower surface 490b of the protection film 490, such as a peeling between the first electrode portion 461 and the protection film 490. On the other hand, the lower surface 490b of the protection film 490 is also contacted with strain resistance films of the resistors R1, R2, etc., the detection electrode portion 32, the upper surface of the insulating film 450, and the like. Thus, when an adhesive force between the protection film 490 and the first electrode portion 461 in the film electrode structure M4 is smaller than that of the protection film 490 to the strain resistance films and the detection electrode portion 32, the detection of no peeling with the film electrode structure M4 can favorably ensure that there is no peeling between the protection film 490 and the strain resistance films, where the adhesive force is larger.

In the pressure sensor 410, the deformation detection unit 30 is disposed under the lower surface of the protection film 490 as a film to be detected of the film electrode structure M4. Like the pressure sensor 10, however, the deformation detection unit 30 may be disposed on the upper surface side of the insulating film 50 as a film to be detected of the film electrode structure M1. Depending on the application of the pressure sensor 10 (40), it is possible to change how the film electrode structure M1 (M4) is incorporated into the pressure sensor 10 (410). In the common respects with the pressure sensor 10 and the film electrode structure M1, the pressure sensor 410 and the film electrode structure M4 according to Fourth Embodiment exhibit effects similar to those of the pressure sensor 10 and the film electrode structure M1.

### Fifth Embodiment

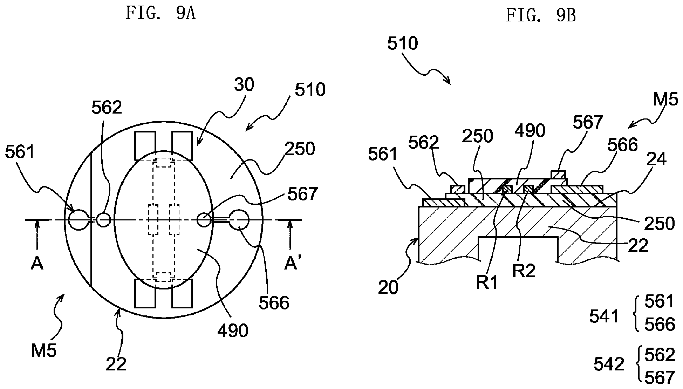

FIG. 9 is a conceptual diagram describing a film electrode structure M5 of a pressure sensor 510 according to Fifth Embodiment using a top view (FIG. 9A) and a cross-sectional view (FIG. 9B). The film electrode structure M5 is different from the film electrode structure M4 of the pressure sensor 410 shown in FIG. 8 in that: a film to be detected includes the insulating film 250 and the protection film 490; and a first electrode portion 541 and a second electrode portion 542 include a first portion and a second portion, respectively. As for the metal stem 20, the deformation detection unit 30, and the protection film 490, however, the pressure sensor 510 and the film electrode structure M5 are similar to the pressure sensor 410 and the film electrode structure M4 according to Fourth Embodiment shown in FIG. 8. In the description of the pressure sensor 510 and the film electrode structure M5 according to Fifth Embodiment, the differences from the pressure sensor 410 and the film electrode structure M4 according to Fourth Embodiment are mainly described, and the common respects with the pressure sensor 410 and the film electrode structure M4 are provided with the same reference numerals and are not described.

As shown in FIG. 9A and FIG. 9B, the film electrode structure M5 incorporated into the pressure sensor 510 includes the insulating film 250 and the protection film 490 as films to be detected. The first electrode portion 541 of the film electrode structure M5 includes a first electrode first section 561 and a first electrode second section 566 separated from each other. The second electrode portion 542 of the film electrode structure M5 includes a second electrode first section 562 and a second electrode second section 567 separated from each other.

As shown in FIG. 9B, at least a part of the second electrode first section 562 opposes to the first electrode first section 561 with the insulating film 250 interposed therebetween, and a peeling of the insulating film 250 is detected by the second electrode first section 562 and the first electrode first section 561. That is, the first electrode first section 561, the second electrode first section 562, and the insulating film 250 of the film electrode structure M5 have the same structure as the first electrode portion 261, the second electrode portion 62, and the insulating film 250 of the film electrode structure M2 shown in FIG. 6.

Moreover, at least a part of the second electrode second section 567 opposes to the first electrode second section 566 with the protection film 490 interposed therebetween, and a peeling of the protection film 490 is detected by the second electrode second section 567 and the first electrode second section 566. That is, the first electrode second section 566, the second electrode second section 567, and the protection film 490 of the film electrode structure M5 have the same structure as the first electrode portion 461, the second electrode portion 462, and the protection film 490 of the film electrode structure M4 shown in FIG. 8.

As with the film electrode structure M2 shown in FIG. 6 and the film electrode structure M4 shown in FIG. 8, the peeling detection unit 70 (see FIG. 3) of the film electrode structure M5 can detect a peeling occurring in the insulating film 250 and the protection film 490 by detection signals from the first electrode portion 541 and the second electrode portion 542. Moreover, the peeling detection unit 70 (see FIG. 3) of the film electrode structure M5 can separately and independently detect a peeling of the insulating film 250 by the first portions 561 and 562 and a peeling of the protection film 490 by the second portions 566 and 567. However, the film electrode structure M5 may collectively detect peelings occurring in the insulating film 250 and the protection film 490.

In the common respects with the pressure sensor 410 and the film electrode structure M4, the pressure sensor 510 and the film electrode structure M5 according to Fifth Embodiment exhibit effects similar to those of the pressure sensor 410 and the film electrode structure M4.

### Sixth Embodiment

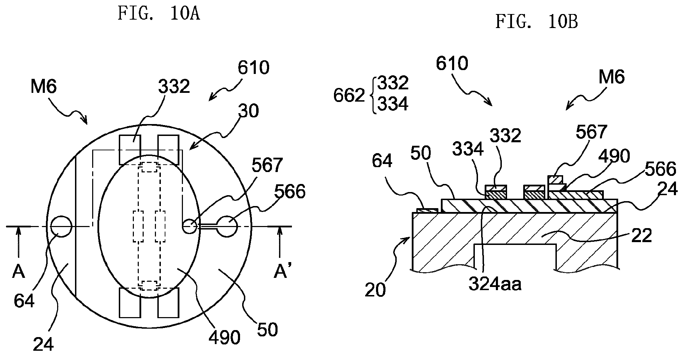

FIG. 10 is a conceptual diagram describing a film electrode structure M6 of a pressure sensor 610 according to Sixth Embodiment using a top view (FIG. 10A) and a cross-sectional view (FIG. 10B). The film electrode structure M6 is different from the film electrode structure M5 of the pressure sensor 510 shown in FIG. 9 in that: a first electrode first section consists of the film formation surface 24; and a second electrode first section 662 consists of the detection electrode portion 332 and the strain resistance film 334. Except for the structures of the film formation surfaces 24 and 662 for detecting a peeling of the insulating film 50, however, the pressure sensor 610 and the film electrode structure M6 are similar to the pressure sensor 510 and the film electrode structure M5 according to Fifth Embodiment shown in FIG. 9. In the description of the pressure sensor 610 and the film electrode structure M6 according to Sixth Embodiment, the differences from the pressure sensor 510 and the film electrode structure M5 according to Fifth Embodiment are mainly described, and the common respects with the pressure sensor 510 and the film electrode structure M5 are provided with the same reference numerals and are not described.

As shown in FIG. 10A and FIG. 10B, similarly to the film electrode structure M5 shown in FIG. 9, the film electrode structure M6 incorporated into the pressure sensor 610 includes the insulating film 50 and the protection film 490 as films to be detected. The first electrode portion 641 of the film electrode structure M6 includes the film formation surface 24 as a first electrode first section (a part of the metal stem 20) and the first electrode second section 566. The second electrode portion 642 of the film electrode structure M6 includes a second electrode first section 662 and a second electrode second section 567.

In the film electrode structure M6, as shown in FIG. 10B, the film formation surface 24 of the metal stem 20 constitutes a first electrode first section. The detection electrode portion 332 and the strain resistance film 334 of the deformation detection unit 30 constitute the second electrode first section 662. As a result, a peeling of the insulating film 50 is detected by the film formation surface 24 and the second electrode first section 662 in the film electrode structure M6. That is, the film formation surface 24 functioning as the first electrode first section, the second electrode first section 662, and the insulating film 50 of the film electrode structure M6 have the same structure as the film formation surface 24, the second electrode portion 362, and the insulating film 50 of the film electrode structure M3 shown in FIG. 7.

Moreover, the first electrode second section 566, the second electrode second section 567, and the protection film 490 of the film electrode structure M6 have the same structure as the first electrode second section 566, the second electrode second section 567, and the protection film 490 of the film electrode structure M5 shown in FIG. 9.

As with the film electrode structure M5 shown in FIG. 9, the peeling detection unit 70 (see FIG. 4) of the film electrode structure M6 can also detect a peeling occurring in the insulating film 50 or the protection film 490. In the film electrode structure M6, the first electrode second section 566 opposes to the film formation surface 24 (first electrode first section) and may thus also serve as a second electrode first section for detecting a peeling of the insulating film 50. When the second electrode first section and the first electrode second section 566 are a common electrode, a peeling of the insulating film 50 or the protection film 490 can be detected with a simple structure.

In the common respects with the pressure sensor 510 and the film electrode structure M5, the pressure sensor 610 and the film electrode structure M6 according to Sixth Embodiment exhibit effects similar to those of the pressure sensor 510 and the film electrode structure M5.

### Seventh Embodiment

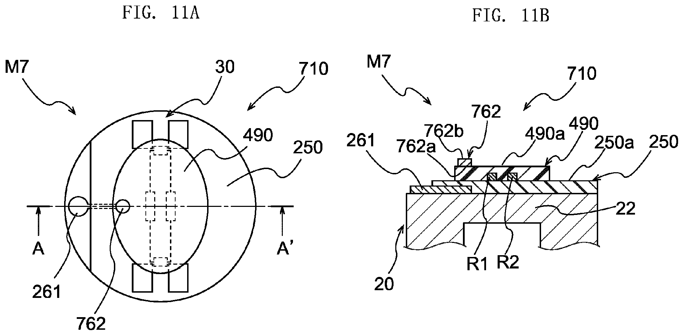

FIG. 11A and FIG. 11B are conceptual diagrams describing a film electrode structure M7 of a pressure sensor 710 according to Seventh Embodiment using a top view (FIG. 11A) and a cross-sectional view (FIG. 11B). The film electrode structure M7 is different from the film electrode structure M2 of the pressure sensor 210 shown in FIG. 6 in that a second electrode portion 762 is disposed on the upper surface 490a of the protection film 490. As for the first electrode portion 261, the metal stem 20, the deformation detection unit 30, the insulating film 250, and the like, however, the pressure sensor 710 and the film electrode structure M7 are similar to the pressure sensor 210 and the film electrode structure M2 according to Second Embodiment shown in FIG. 6. In the description of the pressure sensor 710 and the film electrode structure M7 according to Seventh Embodiment, the differences from the pressure sensor 210 and the film electrode structure M2 according to Second Embodiment are mainly described, and the common respects with the pressure sensor 210 and the film electrode structure M2 are not described.

As shown in FIG. 11A and FIG. 11B, the film electrode structure M7 includes the first electrode portion 261 similar to that of the film electrode structure M2 shown in FIG. 6. That is, the first electrode portion 261 is formed on the film formation surface 24 of the metal stem 20, and the insulating film 250 is formed on the first electrode portion 261 so as to partly overlap therewith.

On the other hand, the pressure sensor 210 includes the protection film 490 formed so as to cover the upper surfaces of the insulating film 250 and the deformation detection unit 30, and the second electrode portion 762 of the film electrode structure M7 is disposed on the upper surface 490a of the protection film 490. As with the second electrode portion 62 shown in FIG. 6, the second electrode portion 762 is made of a conductive film or the like.

The lower surface of the second electrode portion 762 constitutes a second contact region 762a contacted with the upper surface 490a of the protection film 490, and the upper surface of the second electrode portion 762 constitutes a second exposed region 762b exposed from the protection film 490. Although not shown in FIG. 11B, similarly to the second electrode portion 62 shown in FIG. 3, the intermediate wiring 82 is connected to the second exposed region 762b.

As shown in FIG. 11B, the first electrode portion 261 and the second electrode portion 762 oppose to each other with the insulating film 250 and the protection film 490 vertically interposed therebetween. The peeling detection unit 70 (see FIG. 4) electrically connected to the film electrode structure M7 detects a peeling of the insulating film 250 or the protection film 490 between the first electrode portion 261 and the second electrode portion 762 by detecting a change in capacitance between the first electrode portion 261 and the second electrode portion 762. For example, the film electrode structure M7 can detect a peeling occurring between the upper surface of the first electrode portion 261 and the lower surface 50b of the insulating film 250, a peeling occurring between the upper surface 250a of the insulating film 250 and the lower surface 490b of the protection film 490, and the like.

The film electrode structure M7 interposes a plurality of films between the first electrode section 261 and the second electrode section 762 and can collectively detect peelings occurring at three or more interfaces. **In** the common respects with the pressure sensor 210 and the film electrode structure M2, the pressure sensor 710 and the film electrode structure M7 according to Seventh Embodiment exhibit effects similar to those of the pressure sensor 210 and the film electrode structure M2.

### Eighth Embodiment

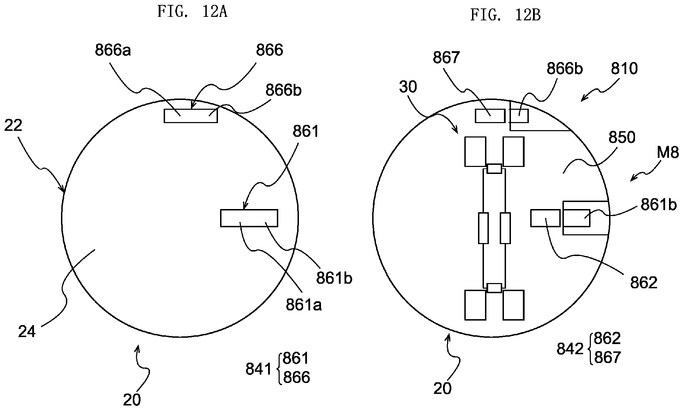

FIG. 12A and FIG. 12B are conceptual diagrams describing a film electrode structure M8 of a pressure sensor 810 according to Eighth Embodiment using a top view. FIG. 12A is a top view showing only the film formation surface 24 of the metal stem 20 and a first electrode portion 841, and FIG. 12B is a top view showing the whole of the pressure sensor 810. The film electrode structure M8 is different from the film electrode structure M2 of the pressure sensor 210 shown in FIG. 6 in terms of arrangement and shapes of the first electrode portion 841, a second electrode portion 842, and an insulating film 850. As for the basic structure for detecting a peeling of the insulating film 850 by the first electrode portion 841 and the second electrode portion 842, however, the pressure sensor 810 and the film electrode structure M8 are similar to the pressure sensor 210 and the film electrode structure M2 according to Second Embodiment shown in FIG. 6 etc. In the description of the pressure sensor 810 and the film electrode structure M8 according to Eighth Embodiment, the differences from the pressure sensor 210 and the film electrode structure M2 according to Second Embodiment are mainly described, and the common respects with the pressure sensor 210 and the film electrode structure M2 are not described.

As shown in FIG. 12A, the first electrode portion 841 of the film electrode structure M8 includes a first electrode first section 861 and a first electrode second section 866 separated from each other. Both of the first electrode first section 861 and the first electrode second section 866 are formed on the film formation surface 24, and the upper surface of each section is contacted with the insulating film 850 shown in FIG. 12A.

As shown in FIG. 12B, cutouts are formed in the insulating film 850, and parts of the first electrode first section 861 and the first electrode second section 866 are exposed from the cutouts. That is, as shown in FIG. 12A, the upper surface of the first electrode first section 861 includes a first contact region 861a contacted with the lower surface of the insulating film 850 and a first exposed region 861b exposed from the insulating film 850. Moreover, the upper surface of the first electrode second section 866 includes a first contact region 866a contacted with the lower surface of the insulating film 850 and a first exposed region 866b exposed from the insulating film 850.

As shown in FIG. 12B, the deformation detection unit 30 for detecting a deformation of the membrane 22 in the metal stem 20 and the second electrode portion 842 of the film electrode structure M8 are formed on the upper surface of the insulating film 850. The second electrode portion 842 of the film electrode structure M8 includes a second electrode first section 862 and a second electrode second section 867 separated from each other.

As shown in FIG. 12B, at least a part of the second electrode first section 862 opposes to the first electrode first section 861 with the insulating film 850 interposed therebetween, and at least a part of the second electrode second section 867 opposes to the first electrode second section 866 with the insulating film 850 interposed therebetween. **In** the film electrode structure M8, a peeling of the insulating film 850 is detected at two locations of the first sections 861 and 862 and the second sections 866 and 867.

In this way, the film electrode structure M8 of the pressure sensor 810 can detect a peeling of the insulating film 850, which is one film to be detected, at a plurality of locations spaced apart from each other. Thus, in the film electrode structure M8, for example, even when the insulating film 850 has a plurality of locations where a peeling is likely to occur, the second electrode portion 842 can be disposed so as to correspond with the locations where a peeling is likely to occur and so as not to overlap with the deformation detection unit 30.

Preferably, an area of at least one of the first electrode portion 841 and the second electrode portion 842 (a total area of the first section and the second section) is 1/50 or less of an area of the insulating film 850 when viewed from the direction perpendicular to the insulating film 850. As a result, a small pressure sensor 810 capable of peeling detection can be achieved by appropriately arranging the first electrode portion 841 and the second electrode portion 842 even without increasing the areas of the film formation surface 24 and the insulating film 850.

In the common respects with the pressure sensor 210 and the film electrode structure M2, the pressure sensor 810 and the film electrode structure M8 according to Eighth Embodiment exhibit effects similar to those of the pressure sensor 210 and the film electrode structure M2.

### Ninth Embodiment

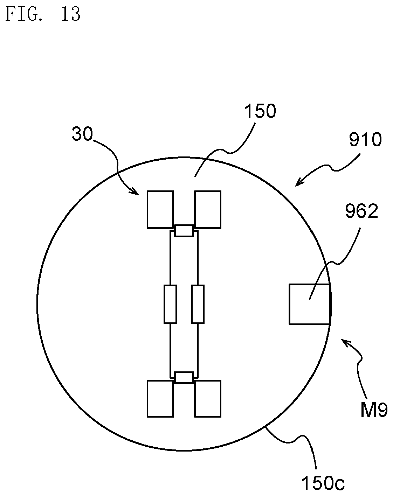

FIG. 13 is a top view of a film electrode structure M9 of a pressure sensor 910 according to Ninth Embodiment. Except for the shape and disposition of a second electrode portion 962, the film electrode structure M9 is similar to the film electrode structure M12 of the pressure sensor 110 according to First Modification shown in FIG. 5. In the description of the pressure sensor 910 and the film electrode structure M9 according to Ninth Embodiment, the differences from the pressure sensor 110 and the film electrode structure M12 according to First Modification are mainly described, and the common respects with the pressure sensor 110 and the film electrode structure M12 are not described.

As shown in FIG. 13, the second electrode portion 962 of the film electrode structure M9 is formed on the upper surface of the insulating film 150 and opposes to the film formation surface 24 of the metal stem 20 functioning as a first electrode portion with the film 150 interposed therebetween. The second electrode portion 962 extends over an outer edge 150c of the insulating film 150 as a film to be detected.

Since a part of the outer edge 150c of the insulating film 150 is sandwiched between the film formation surface 24c and the second electrode portion 962, the film electrode structure M9 can detect a peeling occurring at the outer edge 150c of the insulating film 150. In addition, since the outer edge 150c of the insulating film 150 may be a starting point of peeling, the film electrode structure M9 of the pressure sensor 910 can more quickly detect a peeling of the insulating film 150.

In the common respects with the pressure sensor 110 and the film electrode structure M12, the pressure sensor 910 and the film electrode structure M9 according to Ninth Embodiment exhibit effects similar to those of the pressure sensor 110 and the film electrode structure M12.

### Tenth Embodiment

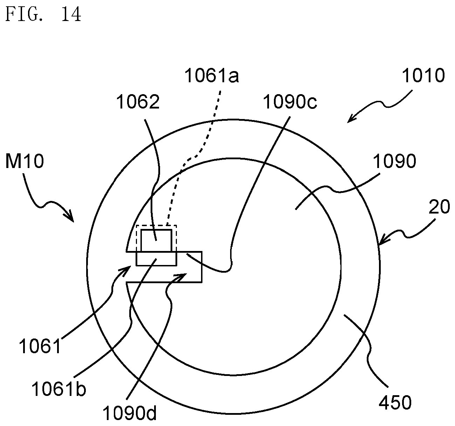

FIG. 14 is a top view of a film electrode structure M10 of a pressure sensor 1010 according to Tenth Embodiment. Except for the shapes and arrangement of a first electrode portion 1061, a second electrode portion 1062, and a protection film 1090, the film electrode structure M10 is similar to the film electrode structure M4 of the pressure sensor 410 according to Fourth Embodiment shown in FIG. 8. In the description of the pressure sensor 1010 and the film electrode structure M10 according to Tenth Embodiment, the differences from the pressure sensor 410 and the film electrode structure M4 according to Fourth Embodiment are mainly described, and the common respects with the pressure sensor 410 and the film electrode structure M4 are not described.

As shown in FIG. 14, the first electrode portion 1061 of the film electrode structure M10 is provided at a position corresponding to a notch 1090d of the protection film 1090 on the upper surface of the insulating film 450. The upper surface of the first electrode portion 1061 includes a first contact region 1061a contacted with the lower surface of the protection film 1090 and a first exposed region 1061b exposed from the protection film 1090. The first exposed region 1061b is exposed from the protection film 1090 via an outer edge 1090c of the notch 1090d, and the first electrode portion 1061 extends over the outer edge 1090c of the protection film 1090.

The second electrode portion 1062 of the film electrode structure M10 is formed on the upper surface of the protection film 1090 and opposes to the first contact region 1061a of the first electrode portion 1061 with the protection film 1090 interposed therebetween. Similarly to the first electrode portion 1061, the second electrode portion 1062 also extends over the outer edge 1090c of the protection film 1090 as a film to be detected.

Since a part of the outer edge 1090c of the protection film 1090 is sandwiched between the first electrode portion 1061 and the second electrode portion 1062, the film electrode structure M10 can detect a peeling occurring at the outer edge 1090c of the protection film 1090. In addition, since the outer edge 1090c of the notch 1090d is more likely to peel off than other portions of the protection film 1090, the film electrode structure M10 of the pressure sensor 1010 can more appropriately detect whether the protection film 1090 is peeled off.

Like the film electrode structure M9 shown in FIG. 13 and the film electrode structure M10 shown in FIG. 14, when at least one of the first electrode portion 1061 and the second electrode portion 962 (1062) extend over the outer edge 150c (1090c) of a film to be detected (the insulating film 150 or the protection film 1090), a peeling of the film to be detected can be detected more sensitively. In the common respects with the pressure sensor 410 and the film electrode structure M4, the pressure sensor 1010 and the film electrode structure M10 according to Tenth Embodiment exhibit effects similar to those of the pressure sensor 410 and the film electrode structure M4.

### Eleventh Embodiment

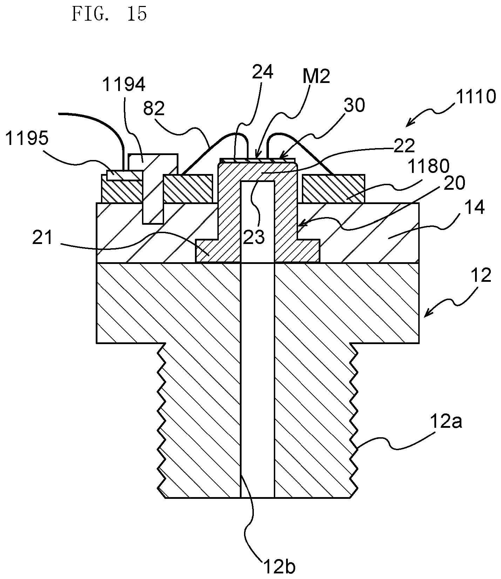

FIG. 15 is an external view of a pressure sensor 1110 according to Eleventh Embodiment. The film electrode structure M2 of the pressure sensor 1110 is similar to the film electrode structure M2 of the pressure sensor 210 shown in FIG. 6. Except for the wiring route of the first electrode portion 261 of the film electrode structure M2, the pressure sensor 1110 is similar to the pressure sensor 210 according to Second Embodiment shown in FIG. 6. In the description of the pressure sensor 1110 according to Eleventh Embodiment, the differences from the pressure sensor 210 according to Second Embodiment are mainly described, and the common respects with the pressure sensor 210 are not described.

As shown in FIG. 15, the metal stem 20 of the pressure sensor 1110 is attached to the connection member 12 by the holding member 14. Also, a circuit board 1180 is fixed to the holding member 14 with a metal screw 1194.

Unlike the first electrode portion 261 of the pressure sensor 210, the first electrode portion 261 (see FIG. 6B) of the film electrode structure M2 of the pressure sensor 1110 is electrically connected to the circuit board 1180 and a peeling detection unit located in the outside of the circuit board 1180 via the metal stem 20 or the like, not the intermediate wiring 82.

That is, all of the metal stem 20, the holding member 14, and the screw 1194 of the pressure sensor 1110 are made of a conductive material and are contacted with each other. The screw 1194 is also contacted with a pad 1195 of the circuit board 1180. Thus, the pad 1195 of the circuit board 1180 is conducted with the first electrode portion 261 (see FIG. 6B) formed on the film formation surface 24 of the metal stem 20 via the metal stem 20, the holding member 14, and the screw 1194.

In the pressure sensor 1110, since the first electrode portion 261 is electrically connected to the peeling detection unit via the metal stem 20 or the like, the number of intermediate wirings 82 by wire bonding can be reduced, and this contributes to improvement in productivity.

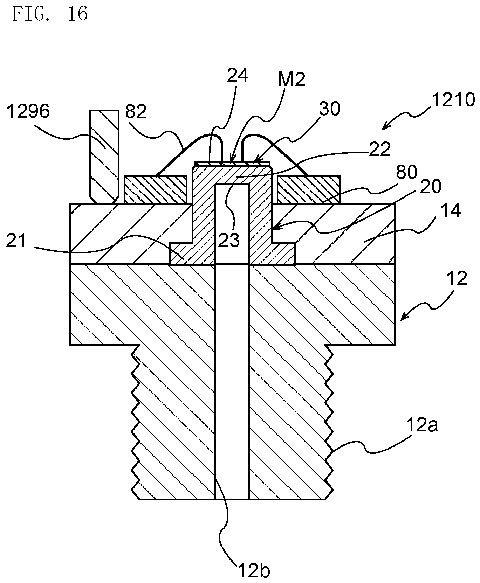

FIG. 16 is an external view of a pressure sensor 1210 according to Second Modification. In the pressure sensor 1210, similarly to the pressure sensor 1110 shown in FIG. 15, the first electrode portion 261 is electrically connected to the peeling detection unit via the metal stem 20 or the like. In the pressure sensor 1210, a connector pin 1296 contacted with the holding member 14 is conducted with the first electrode portion 261 (see FIG. 6B) formed on the film formation surface 24 of the metal stem 20 via the metal stem 20 and the holding member 14.

Moreover, the connector pin 1296 is electrically connected to an external peeling detection unit. Except that the connector pin 1296 and the first electrode portion 261 are conducted, the pressure sensor 1210 is similar to the pressure sensor 210 according to Second Embodiment.

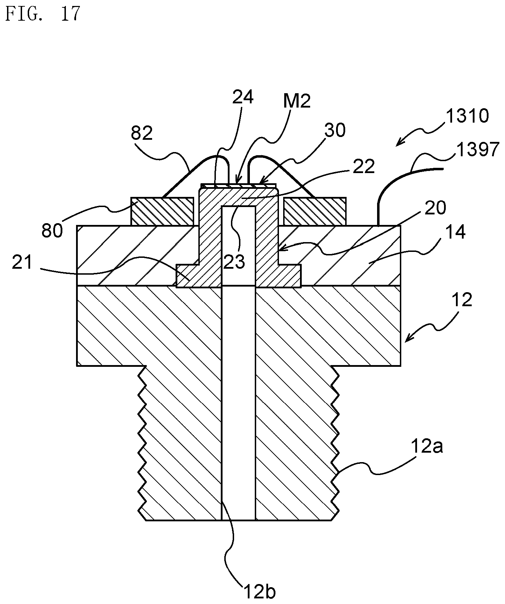

FIG. 17 is an external view of a pressure sensor 1310 according to Third Modification. In the pressure sensor 1310, similarly to the pressure sensor 1110 shown in FIG. 15, the first electrode portion 261 is electrically connected to a peeling detection unit via the metal stem 20 or the like. In the pressure sensor 1310, a conductive wire 1397 contacted with the holding member 14 is conducted with the first electrode portion 261 (see FIG. 6B) formed on the film formation surface 24 of the metal stem 20 via the metal stem 20 and the holding member 14.

As with the connector pin 1296 shown in FIG. 16, the wire 1397 is electrically connected to an external peeling detection unit. Except that the conductive wire 1397 and the first electrode portion 261 are conducted, the pressure sensor 1310 is similar to the pressure sensor 210 according to Second Embodiment.

In the pressure sensors 1210 and 1310 according to Second and Third Modifications, similarly to the pressure sensor 1110, the first electrode portion 261 is also electrically connected to the peeling detection unit via the metal stem 20 or the like, and the productivity is good.

Hereinabove, the film electrode structures M1 to M10 and M12 and the pressure sensors 10 to 1310 are described with reference to embodiments and modifications, but the present invention is not limited to only these embodiments and, needless to say, includes many other embodiments and modifications. For example, a film to be detected, which is a detection target for peeling, is not limited to only an insulating film or a protection film, and a detection target may be a peeling of other insulating or conductive films. Also, the peeling detection unit is not limited to one that detects a change in capacitance. For example, when a film to be detected is a conductor film or semiconductor film having conductivity, it is possible to use a peeling detection unit that detects a peeling based on a change in resistance value between electrodes.

### Description of the Reference Numerical

10, 110, 210, 310, 410, 510, 610, 710, 810, 910, 1010, 1110, 1210, 1310... pressure sensor
M1, M2, M3, M4, M5, M6, M7, M8, M9, M10, M12... film electrode structure
12... connection member
12a... screw groove
12b... flow path
14... holding member
20... metal stem
21... flange portion
22... membrane
23... inner surface
24... film formation surface
24a... first contact region
24aa, 324aa... first opposing portion
24b... first exposed region
30... deformation detection unit
R1, R2, R3, R4... resistor
32, 332... detection electrode portion
34... electric wiring
334... strain resistance film
50, 150, 250, 450, 850... insulating film
50a, 150a, 250a, 450a... upper surface
50b, 150b, 250b... lower surface
150c... outer edge
261, 461, 541, 641, 841, 1061... first electrode portion
561, 861... first electrode first section
566, 866... first electrode second section
261a, 461a, 1061a... first contact region
261aa... first opposing portion
261b, 461b, 1061b... first exposed region
62, 362, 462, 542, 642, 762, 842, 1062... second electrode portion
562, 662, 862... second electrode first section
567, 867... second electrode second section
62a, 462a, 762a... second contact region
62b, 462b, 762b... second exposed region
64, 164... connection portion
70... peeling detection unit
80... circuit board
82, 182... intermediate wiring
490, 1090... protection film
490a... upper surface
490b... lower surface
1090c... outer edge
1090d... notch
1194... screw
1195... pad
1296... connector pin
1397... wire

## Claims

1. A pressure sensor comprising a film peeling detection device and a deformation detection unit (30),
the film peeling detection device comprising:
a detection target film (50, 490, 1090);
a first electrode portion (24) contacted with a lower surface of the detection target film; and
a second electrode portion (62) contacted with an upper surface of the detection target film and at least partly opposing to the first electrode portion with the detection target film interposed therebetween,
wherein the first electrode portion (24) comprises:
a first contact region (24a) including a first opposing portion contacted with the detection target film and opposing to the second electrode portion; and
a first exposed region (24b) exposed from the detection target film, and
wherein the second electrode portion (62) comprises:
a second contact region (62a) including a second opposing portion contacted with the detection target film and opposing to the first electrode portion; and
a second exposed region (62b) exposed from the detection target film,
the deformation detection unit being formed under the lower surface or above the upper surface of the detection target film and detecting a deformation of a membrane (22) due to pressure
**characterized in that**
the film peeling detection device comprises a peeling detection unit (70) for detecting a peeling of the detection target film between the first electrode portion (24) and the second electrode portion (62),
the first electrode portion (24) is electrically connected via the first exposed region (24b) to the peeling detection unit (70), and
the second electrode portion (62) is electrically connected to the peeling detection unit via the second exposed region (62b).

2. The pressure sensor according to claim 1, wherein the peeling detection unit detects a capacitance between the first electrode portion and the second electrode portion or detects resistance value between the first electrode portion and the second electrode portion.

3. The pressure sensor according to claim 1 or 2, wherein
the first electrode portion comprises a conductive film, and
the first contact region and the first exposed region are arranged on the same plane.

4. The pressure sensor according to any of claim 1 to claim 3, wherein the detection target film comprises an insulating film for insulating the upper surface and the lower surface.

5. The pressure sensor according to any of claim 1 to claim 3, wherein the detection target film comprises a protection film for covering and protecting a member formed under the lower surface.

6. The pressure sensor according to any of claim 1 to claim 5, wherein an area of at least one of the first electrode portion and the second electrode portion viewed from a perpendicular direction to the upper surface of the detection target film is 1/50 or less of an area of the detection target film.

7. The pressure sensor according to any of claim 1 to claim 5, wherein
the first electrode portion comprises a first electrode first section and a first electrode second section separated from each other,
the second electrode portion comprises a second electrode first section and a second electrode second section separated from each other,
at least a part of the second electrode first section opposes to the first electrode first section with the detection target film interposed therebetween, and
at least a part of the second electrode second section opposes to the first electrode second section with the detection target film interposed therebetween.

8. The pressure sensor according to claim 7, wherein
the detection target film comprises:
an insulating film for insulating the upper surface and the lower surface; and
a protection film for covering and protecting a member formed under the lower surface,
at least a part of the second electrode first section opposes to the first electrode first section with the insulating film interposed therebetween, and
at least a part of the second electrode second section opposes to the first electrode second section with the protection film interposed therebetween.

9. The pressure sensor according to claim 8, wherein the second electrode first section and the first electrode second section are a common electrode.

10. The pressure sensor according to any of claim 1 to claim 9, wherein at least one of the first electrode portion and the second electrode portion overlap with an outer edge of the detection target film.

11. The pressure sensor according to any of claim 1 to claim 10, wherein the lower surface of the detection target film is contacted with the first electrode portion and a film formation surface made of a material different from that of the first electrode portion and has an adhesion force to the first electrode portion being smaller than an adhesion force to the film formation surface.

12. The pressure sensor according to any of claim 1 to claim 11, wherein
the detection target film comprises an insulating film formed on a film formation surface of a stainless steel stem, and
the insulating film comprises at least one of silicon oxide, silicon nitride, and silicon oxynitride.

13. The pressure sensor according to any of claim 1 to claim 12, wherein
the membrane is a part of a stainless steel stem, and
the first electrode portion is electrically connected to the peeling detection unit via the stem.

## Patentansprüche

1. Ein Drucksensor, umfassend eine Filmablösungsdetektionsvorrichtung und eine Verformungsdetektionseinheit (30),
wobei die Filmablösungsdetektionsvorrichtung umfasst:
einen Detektionszielfilm (50, 490, 1090);
einen ersten Elektrodenbereich (24), der mit einer unteren Fläche des Detektionszielfilms in Kontakt steht; und
einen zweiten Elektrodenbereich (62), der mit einer oberen Fläche des Detektionszielfilms in Kontakt steht und zumindest teilweise dem ersten Elektrodenbereich gegenüberliegt, wobei der Detektionszielfilm dazwischen angeordnet ist,
wobei der erste Elektrodenbereich (24) umfasst:
einen ersten Kontaktbereich (24a) mit einem ersten gegenüberliegenden Bereich, der mit dem Detektionszielfilm in Kontakt steht und dem zweiten Elektrodenbereich gegenüberliegt; und
einen ersten exponierten Bereich (24b), der von dem Detektionszielfilm exponiert ist, und
wobei der zweite Elektrodenbereich (62) umfasst:
einen zweiten Kontaktbereich (62a) mit einem zweiten gegenüberliegenden Bereich, der mit dem Detektionszielfilm in Kontakt steht und dem ersten Elektrodenbereich gegenüberliegt; und
einen zweiten exponierten Bereich (62b), der von dem Detektionszielfilm exponiert ist,
wobei die Verformungsdetektionseinheit unter der unteren Fläche oder über der oberen Fläche des Detektionszielfilms gebildet ist und eine Verformung einer Membran (22) aufgrund von Druck detektiert,
**dadurch gekennzeichnet, dass**
die Filmablösungsdetektionsvorrichtung eine Ablösungsdetektionseinheit (70) zum Detektieren einer Ablösung des Detektionszielfilms zwischen dem ersten Elektrodenbereich (24) und dem zweiten Elektrodenbereich (62) umfasst,
der erste Elektrodenbereich (24) über den ersten exponierten Bereich (24b) elektrisch mit der Ablösungsdetektionseinheit (70) verbunden ist und
der zweite Elektrodenbereich (62) über den zweiten exponierten Bereich (62b) elektrisch mit der Ablösungsdetektionseinheit verbunden ist.

2. Der Drucksensor nach Anspruch 1, wobei die Ablösungsdetektionseinheit eine Kapazität zwischen dem ersten Elektrodenbereich und dem zweiten Elektrodenbereich detektiert oder einen Widerstandswert zwischen dem ersten Elektrodenbereich und dem zweiten Elektrodenbereich detektiert.

3. Der Drucksensor nach Anspruch 1 oder 2, wobei
der erste Elektrodenbereich einen leitfähigen Film umfasst und
der erste Kontaktbereich und der erste exponierte Bereich auf derselben Ebene angeordnet sind.

4. Der Drucksensor nach einem der Ansprüche 1 bis 3, wobei der Detektionszielfilm einen Isolierfilm zum Isolieren der oberen Fläche und der unteren Fläche umfasst.

5. Der Drucksensor nach einem der Ansprüche 1 bis 3, wobei der Detektionszielfilm einen Schutzfilm zum Abdecken und Schützen eines unter der unteren Fläche gebildeten Elements umfasst.

6. Der Drucksensor nach einem der Ansprüche 1 bis 5, wobei eine Fläche von mindestens einem des ersten Elektrodenbereichs und des zweiten Elektrodenbereichs, gesehen aus einer zur oberen Fläche des Detektionszielfilms senkrechten Richtung, 1/50 oder weniger einer Fläche des Detektionszielfilms beträgt.

7. Der Drucksensor nach einem der Ansprüche 1 bis 5, wobei
der erste Elektrodenbereich einen ersten Abschnitt der ersten Elektrode und einen zweiten Abschnitt der ersten Elektrode umfasst, die voneinander getrennt sind,
der zweite Elektrodenbereich einen ersten Abschnitt der zweiten Elektrode und einen zweiten Abschnitt der zweiten Elektrode umfasst, die voneinander getrennt sind,
mindestens ein Teil des ersten Abschnitts der zweiten Elektrode dem ersten Abschnitt der ersten Elektrode gegenüberliegt, wobei der Detektionszielfilm dazwischen angeordnet ist, und
mindestens ein Teil des zweiten Abschnitts der zweiten Elektrode dem zweiten Abschnitt der ersten Elektrode gegenüberliegt, wobei der Detektionszielfilm dazwischen angeordnet ist.

8. Der Drucksensor nach Anspruch 7, wobei
der Detektionszielfilm umfasst:
einen Isolierfilm zum Isolieren der oberen Fläche und der unteren Fläche und
einen Schutzfilm zum Abdecken und Schützen eines unter der unteren Fläche gebildeten Elements,
mindestens ein Teil des ersten Abschnitts der zweiten Elektrode dem ersten Abschnitt der ersten Elektrode gegenüberliegt, wobei der Isolierfilm dazwischen angeordnet ist, und
mindestens ein Teil des zweiten Abschnitts der zweiten Elektrode dem zweiten Abschnitt der ersten Elektrode gegenüberliegt, wobei der Schutzfilm dazwischen angeordnet ist.

9. Der Drucksensor nach Anspruch 8, wobei der erste Abschnitt der zweiten Elektrode und der zweite Abschnitt der ersten Elektrode eine gemeinsame Elektrode sind.

10. Der Drucksensor nach einem der Ansprüche 1 bis 9, wobei mindestens einer des ersten Elektrodenbereichs und des zweiten Elektrodenbereichs mit einem äußeren Rand des Detektionszielfilms überlappt.

11. Der Drucksensor nach einem der Ansprüche 1 bis 10, wobei die untere Fläche des Detektionszielfilms mit dem ersten Elektrodenbereich und einer Filmbildungsfläche aus einem anderen Material als dem des ersten Elektrodenbereichs in Kontakt steht und eine Haftkraft zum ersten Elektrodenbereich aufweist, die kleiner ist als eine Haftkraft zur Filmbildungsfläche.

12. Der Drucksensor nach einem der Ansprüche 1 bis 11, wobei
der Detektionszielfilm einen auf einer Filmbildungsfläche eines Edelstahlschafts gebildeten Isolierfilm umfasst und
der Isolierfilm mindestens eines von Siliziumoxid, Siliziumnitrid und Siliziumoxynitrid umfasst.

13. Der Drucksensor nach einem der Ansprüche 1 bis 12, wobei
die Membran ein Teil eines Edelstahlschafts ist und
der erste Elektrodenbereich über den Schaft elektrisch mit der Ablösungsdetektionseinheit verbunden ist.

## Revendications

1. Capteur de pression comprenant un dispositif de détection de décollement de film et une unité de détection de déformation (30),
le dispositif de détection de décollement de film comprenant :
un film cible de détection (50, 490, 1090) ;
une première portion d'électrode (24) en contact avec une surface inférieure du film cible de détection ; et
une seconde portion d'électrode (62) en contact avec une surface supérieure du film cible de détection et au moins partiellement opposée à la première portion d'électrode avec le film cible de détection interposé entre celles-ci,
dans lequel la première portion d'électrode (24) comprend :
une première région de contact (24a) incluant une première portion opposée en contact avec le film cible de détection et opposée à la seconde portion d'électrode ; et
une première région exposée (24b) exposée à partir du film cible de détection, et
dans lequel la seconde portion d'électrode (62) comprend :
une seconde région de contact (62a) incluant une seconde portion opposée en contact avec le film cible de détection et opposée à la première portion d'électrode ; et
une seconde région exposée (62b) exposée à partir du film cible de détection,
l'unité de détection de déformation étant formée sous la surface inférieure ou au-dessus de la surface supérieure du film cible de détection et détectant une déformation d'une membrane (22) due de à la pression **caractérisé en ce que**
le dispositif de détection de décollement de film comprend une unité de détection de décollement (70) pour détecter un décollement du film cible de détection entre la première portion d'électrode (24) et la seconde portion d'électrode (62),
la première portion d'électrode (24) est électriquement connectée par l'intermédiaire de la première région exposée (24b) à l'unité de détection de décollement (70), et
la seconde portion d'électrode (62) est électriquement connectée à l'unité de détection de décollement par l'intermédiaire de la seconde région exposée (62b).

2. Capteur de pression selon la revendication 1, dans lequel l'unité de détection de décollement détecte une capacité entre la première portion d'électrode et la seconde portion d'électrode ou détecte une valeur de résistance entre la première portion d'électrode et la seconde portion d'électrode.

3. Capteur de pression selon la revendication 1 ou la revendication 2, dans lequel
la première portion d'électrode comprend un film conducteur, et
la première région de contact et la première région exposée sont agencées sur le même plan.

4. Capteur de pression selon l'une quelconque de la revendication 1 à la revendication 3, dans lequel le film cible de détection comprend un film isolant pour isoler la surface supérieure et la surface inférieure.

5. Capteur de pression selon l'une quelconque de la revendication 1 à la revendication 3, dans lequel le film cible de détection comprend un film de protection pour couvrir et protéger un élément formé sous la surface inférieure.

6. Capteur de pression selon l'une quelconque de la revendication 1 à la revendication 5, dans lequel une superficie d'au moins l'une de la première portion d'électrode et de la seconde portion d'électrode vue à partir d'une direction perpendiculaire à la surface supérieure du film cible de détection est de 1/50 ou moins d'une superficie du film cible de détection.

7. Capteur de pression selon l'une quelconque de la revendication 1 à la revendication 5, dans lequel la première portion d'électrode comprend une première section de première électrode et une seconde section de première électrode séparées l'une de l'autre,
la seconde portion d'électrode comprend une première section de seconde électrode et une seconde section de seconde électrode séparées l'une de l'autre,
au moins une partie de la première section de seconde électrode s'oppose à la première section de première électrode avec le film cible de détection interposé entre celles-ci, et
au moins une partie de la seconde section de seconde électrode s'oppose à la seconde section de première électrode avec le film cible de détection interposé entre celles-ci.

8. Capteur de pression selon la revendication 7, dans lequel
le film cible de détection comprend :
un film isolant pour isoler la surface supérieure et la surface inférieure ; et
un film de protection pour couvrir et protéger un élément formé sous la surface inférieure,
au moins une partie de la première section de seconde électrode s'oppose à la première section de première électrode avec le film isolant interposé entre celles-ci, et
au moins une partie de la seconde section de seconde électrode s'oppose à la seconde section de première électrode avec le film de protection interposé entre celles-ci.

9. Capteur de pression selon la revendication 8, dans lequel la première section de seconde électrode et la seconde section de première électrode sont une électrode commune.

10. Capteur de pression selon l'une quelconque de la revendication 1 à la revendication 9, dans lequel au moins l'une de la première portion d'électrode et de la seconde portion d'électrode chevauche un bord externe du film cible de détection.

11. Capteur de pression selon l'une quelconque de la revendication 1 à la revendication 10, dans lequel la surface inférieure du film cible de détection est en contact avec la première portion d'électrode et une surface de formation de film constituée d'un matériau différent de celui de la première portion d'électrode et a une force d'adhérence à la première portion d'électrode qui est plus petite qu'une force d'adhérence à la surface de formation de film.

12. Capteur de pression selon l'une quelconque de la revendication 1 à la revendication 11, dans lequel le film cible de détection comprend un film isolant formé sur une surface de formation de film d'une tige en acier inoxydable, et
le film isolant comprend au moins un élément parmi l'oxyde de silicium, le nitrure de silicium, et l'oxynitrure de silicium.

13. Capteur de pression selon l'une quelconque de la revendication 1 à la revendication 12, dans lequel la membrane fait partie d'une tige en acier inoxydable, et
la première portion d'électrode est électriquement connectée à l'unité de détection de décollement par l'intermédiaire de la tige.
